# EUROPEAN PATENT SPECIFICATION

(11) **EP 1 312 188 B1**
(45) Date of publication and mention of the grant of the patent: **26.09.2007**
(21) Application number: 01960879.3
(22) Date of filing: 09.08.2001
(51) Int. Cl.: H04L 12/64

(54) **AUDIO DATA PROCESSING**
AUDIODATENVERARBEITUNG
TRAITEMENT DE DONNEES AUDIO

(30) Priority: 25.08.2000 EP 00307348
(43) Date of publication of application: 21.05.2003
(73) Proprietor: BRITISH TELECOMMUNICATIONS public limited company, London EC1A 7AJ (GB)
(72) Inventor: RADENKOVIC, Milena, East Midlands NG1 5DU (GB); GREENHALGH, Christopher, Michael, Nottingham NG11 6DR (GB)
(74) Representative: Nash, Roger William
(86) International application number: PCT/GB2001/003595
(87) International publication number: WO 2002/017579

(56) References cited:
- EP-A- 1 024 638
- KYEONG-YEOL YU, JONG-HOON PARK, JONG-HYEONG LEE: "Linear PCM Signal Processing for Audio Processing Unit in Multipoint Video Conferencing System" IEE, July 1998 (1998-07), pages 549-553, XP002159070 KOREA

## Description

This invention relates to audio data processing and in particular concerns a method, system and software application program for a real-time audio service for processing audio data streams transmitted over a communications network.

Developers of real-time audio services have for some time recognised the need for scalability in terms of the number of simultaneous listeners to an audio stream. Applications such as video on demand, on-line lectures and Internet radio require an audio stream to be broadcast from a single source to potentially many listeners. Various techniques have been proposed for reducing the bandwidth required for such broadcasts, most notably network multicasting including Internet multicasting, for example. By comparison however, support for many simultaneous speakers has not been fully developed. Some telephony and CSCW (Computer Supported Co-operative Work) applications such as audio and video-conferencing do support several simultaneous speakers, but the focus has been mostly on small groups. In addition, where the possibility of simultaneous speaking has been acknowledged applications usually prevent it through the use of floor control and "push-to-talk" concepts that enforce turn-taking and ensure that only one participant speaks at a time.

Communication protocols often discount the possibility of multiple simultaneous speakers. The Internet standard Real Time Protocol (RTP) (IETF RFC 1889) is the standard packet format used for continuous media traffic, such as audio streams, on the Internet. RTP includes sophisticated algorithms to control the amount of management traffic placed on the network, but assumes that audio traffic will not be a problem: "For example, in any audio conference the data [audio] traffic is inherently self-limiting because only one or two people will speak at a time ...", (RFC 1889, section 6.1). Similarly, the multicast Internet backbone (MBone), which provides the Internet's wide-area multicast capabilities, does not actively support simultaneous speakers. The Mbone guidelines for use and resources assume that each audio session will not have more than one active speaker at a time. Telecommunication applications are now emerging that support on-line events involving large groups of people. For example, collaborative virtual environments (CVEs) support interactive social events such as multi-player games and inhabited television for large on-line communities. Speech is the primary communication medium for on-line social interaction and so real-time audio services are vital for these new applications. Indeed, speech is arguably the most critical aspect of any real-time collaborative application. Research has shown that problems with other aspects of collaborative systems such as video, shared tools, or 3D graphics, can be resolved or compensated for by speech.

Analysis of patterns of audio activity in CVE applications, for example virtual teleconferencing, has revealed significant periods when several participants are simultaneously generating audio traffic. In relatively focused applications such as tele-conferencing, audio activity is best approximated by a model of people transmitting audio at random, rather than deliberately avoiding overlapping speech. Indeed, overlapping audio, including speech and other sounds, is likely to be a basic requirement for many CSCW applications

Unfortunately, there are many disadvantages associated with real-time audio services that allow many simultaneous speakers. Real-time audio is bandwidth intensive, particularly for applications that support large numbers of users. In addition, packet-loss due to network congestion can severely reduce the intelligibility of received audio streams.

Providing an audio service for many simultaneous speakers is a significant problem since each speaker independently introduces a new audio stream that has to be accommodated by the network and that also has to be processed by each recipient's audio receiver. While multicasting reduces the bandwidth required to distribute a single audio stream to many listeners, it does not address the problem of many simultaneous speakers.

Audio services are known in which peer-to-peer architectures provide each user with an independent audio stream from each respective speaker. By receiving independent audio streams each listener can create their own personal audio mix. The mix can be tailored to the user's own audio equipment capabilities; the audio streams can be spatialised according to associated speaker locations within a shared virtual space; and the streams can be individually controlled, for example allowing the volume of particular speakers to be raised or lowered according to their relative importance, for example. Peer-to-Peer audio services can be implemented using unicast or multicast protocols.

The peer-to-peer approach is very demanding in terms of network resources, particularly bandwidth, and can easily flood the network with traffic. With underlying unicast protocols, which are typically used today for wide-area communication, the resulting number of audio streams is of the other n², where n is the number of simultaneous users, that is to say for the case in which all users are sending audio data simultaneously. With underlying multicast protocols, which are still experimental over wide-area networks, this reduces to the order n, but no lower.

With conventional networks such as the Internet, once the traffic in any part of the network exceeds the local capacity then that part of the network becomes congested. This congestion causes speech to become delayed (due both to direct delay and also jitter) and increasingly broken and disjointed (due to audio data packets being lost in transit). The peer-to-peer approach is also very demanding in terms of the processing to be done by each listener's terminal, which must be capable of receiving, decoding, processing, mixing and playing out all of the available audio streams. User terminals may become overloaded, causing problems similar to an overloaded network.

Audio services which use total mixing are also known. In the total mixing approach each audio stream is sent to a central audio server that mixes the audio streams into a single stream that is then redistributed to each listener. This approach requires that each listener and surrounding network handles only one audio stream. Total mixing, however, prevents each listener from creating their own personal mix and the central server becomes a potential bottleneck in the system, since it and its nearby network still have to receive, mix and distribute n audio streams. Other drawbacks associated with total mixing include increased delay due to additional processing, reduced audio fidelity, additional hardware requirements and management complexity. In this respect total mixing is only appropriate for relatively simple applications where resources are limited. Total mixing is not appropriate for high fidelity applications such as home entertainment and tele-conferencing where more resources are generally available and where audio spatialisation is more important, that is to say where separate audio streams are required. An example of total mixing is described by one of the present inventors in "Inhabited TV: Multimedia Broadcasting from Large Scale Collaborative Virtual World", Fracta Universitatisi, Ser. Electronics and Energetics, 13(1) IEEE, ISBN 0-7803-5678-X.

Another example of an audio service that supports many simultaneous speakers is described in "Diamond Park and Spline: A Social Virtual Reality System With 3D Animation, Spoken Interaction, and Runtime Extendibility", PRESENCE, 6(4), 461-481, 1997 MIT. This paper describes a system which allow users with low bandwidth connections to access an audio-graphical multi-user virtual world. In this approach one or more low-bandwidth users connect to a specialised access server that interfaces to a main system which is configured for peer-to-peer multicast audio. The access server or servers deal with and mix all of the available audio streams. It is also known from EP-A-1 024 638 to direct terminals to adjust their coding algoritms based on system bandwidth usage. According to an aspect of the present invention there is provided a method of processing audio data streams transmitted in a communications network; said method comprising the steps of:-
i) receiving a plurality of audio data streams transmitted from one or more audio data stream transmitters distributed in the network; and,
ii) processing data relating to at least one respective network resource parameter to determine respective network resources available for subsequent communication of said audio data streams to at least one respective audio data stream receiver in the network; and,
iii) comparing said available resources with respective network resource requirements necessary for communicating said audio streams to at least one respective audio data stream receiver in the network; and,
iv) determining whether to mix selected audio data streams prior to transmission in response to said comparison.

The term "network resources" used herein refers to any component in a communications network necessary for communicating audio data streams to potential recipients, including but not limited to network communication links, network audio processors or mixers, audio stream transmitters and receivers and user terminals, for example.

By comparing available network resources with network resource requirements necessary for communicating audio streams the above method enables audio mixing decisions to be made dynamically in response to changing network conditions or application requirements. In this way the number of data streams transmitted can be controlled so that network traffic can be optimised according to available network resources. This aspect of the invention is particularly relevant for dynamic virtual environment applications involving varying numbers of active participants engaged in various activities and running over dynamic networks where congestion and delay may change rapidly. The method enables mixing decisions to be made that adapt to changing network conditions and application requirements so as to optimise the conflicting requirements of audio quality and traffic management.

Preferably the method further comprises the step of:-
v) processing two or more audio streams in response to said comparison to provide at least one mixed audio data stream for subsequent transmission in said network. Thus, if a decision is made to mix selected audio data streams the traffic introduced into the network can be reduced. The amount of processing required by neighbouring data stream receivers can also be reduced. Mixing enables two or more selected audio data streams to be combined to reduce overall network congestion without significantly affecting the intelligibility of the mixed audio streams when received by a user, for example in a similar way that stereo audio signals can be combined for playback on a non-stereo enabled output device such as a hand held radio receiver having a single loudspeaker.

Conveniently, steps ii) and iii) comprise the steps of:-
determining a current value for the or each respective network resource parameter; and,
comparing the or each respective current resource parameter value with a respective minimum resource threshold value necessary for communicating said unmixed audio data streams to the or each respective receiver. In this way the available network resources can be compared with pre-determined minimum resource requirements necessary for transmitting or processing all the unmixed data streams.

In preferred embodiments, said minimum resource threshold value is determined according to at least one pre-defined quality of service parameter. In this way mixing decisions can be made according to pre-determined quality of service requirements.

Preferably, said network is a packet switched network and said pre-defined quality of service parameter is defined by a maximum packet loss rate. Thus, a minimum threshold value may be determined according to an acceptable packet loss rate associated with a codec used to encode respective audio streams. For instance, a maximum acceptable packet loss rate for an audio codec may be 15%.

Conveniently, one network resource parameter relates to available network bandwidth for transmission of said audio data streams to the or each respective receiver. In this way mixing decisions can be determined according to the bandwidth available for transmitting the audio streams to a next audio stream receiver in the network. This provides for efficient use of network bandwidth and readily enables a maximum number of mixed or unmixed audio data streams to be transmitted without causing congestion in the network.

Preferably, said available bandwidth capacity is determined by user specific quality of service requirements. In this way bandwidth resources can be allocated or reserved for use according to user specified quality of service requirements. The allocation or reservation of bandwidth may be controlled by different charging tariffs associated with the quality of service required. In this way a user may specify a quality of service requirement of say 3 x 64kb/s audio channels in which case selected audio streams will be mixed by the network when more than three separate audio streams are to be transmitted by the network. In this way available bandwidth may be considered as allocated or reserved bandwidth.

Conveniently, one network resource parameter relates to receiver processing characteristics. Thus, mixing decisions can be determined according to the characteristics of respective receivers. In this way separate audio streams being sent to a receiver having a low processing capability or capacity can be mixed in the network so that the number of audio streams the receiver receives is reduced.

In preferred embodiments, said audio data streams are selected for mixing according to predetermined criteria. This enables selection criteria to be used to determine which of the received audio data streams should be mixed.

In one way, said audio streams are mixed according to audio stream content. For instance, in a virtual environment one or more audio streams may be more significant in terms of audio content than others and the loss of audio spatialisation experienced by a recipient will be less if the less significant audio streams are mixed in preference to the more significant ones.

In another way, said audio streams are mixed according to recipient requirements. In this way mixing can be determined by the recipient's own requirements, for instance the extent of audio spatialisation required.

In a further way, said audio streams are mixed according to respective audio stream sources. In this way audio streams from related sources can be mixed, for instance it may be desirable to mix all audio streams associated with a particular group of participants in an audio conference or virtual environment.

In a yet further way, said audio streams are mixed according to receiver capabilities. In this way audio streams may be mixed according to the capabilities of the receiver. For example, a receiver may comprise a full 3-D audio system capable of recreating fully spatialised studio quality audio where mixing considerations are important for recreating spatialised audio. Alternatively a receiver may comprise a simple stereo audio system where mixing considerations are less important.

According to another aspect of the invention there is provided a software program arranged to process audio data streams according to the above mentioned method.

According to a further aspect of the invention there is provided a system for processing audio data streams transmitted in a communications network; said system comprising:-
i) a receiver for receiving a plurality of audio data streams transmitted from one or more audio data stream transmitters distributed in the network; and,
ii) a processor for processing data relating to at least one respective network resource parameter to determine respective network resources available for subsequent transmission of said audio data streams in the network; and,
iii) a comparator for comparing said available resources with respective network resource requirements necessary for transmission of said audio streams to at least one respective audio data stream receiver in the network; and,
iv) determining means for determining whether to mix selected audio data streams prior to transmission in response to said comparison.

The invention will now be described by way of example only with reference to the accompanying drawings in which:-
Figure 1 is a schematic representation of a network used for implementing an embodiment of the present invention;
Figure 2 is a schematic representation of a logical network topology for part of the network of Figure 1;
Figure 3 shows a modular block diagram of an audio data processor for processing audio data streams transmitted in the network of Figures 1 and 2;
Figure 4 is a flowchart showing steps involved in implementing an embodiment of the invention;
Figure 5 is a schematic representation of a distributed processing system for simulating network conditions;
Figure 6 is a schematic representation of one implementation of the distributed processing system of Figure 5 used for determining network performance characteristics;
Figure 7 is a graphical representation of simulated network performance characteristics showing packet loss rates for different audio distribution strategies; and,
Figure 8 is a graphical representation similar to Figure 7 showing the different audio stream distribution characteristics for different audio distribution strategies.

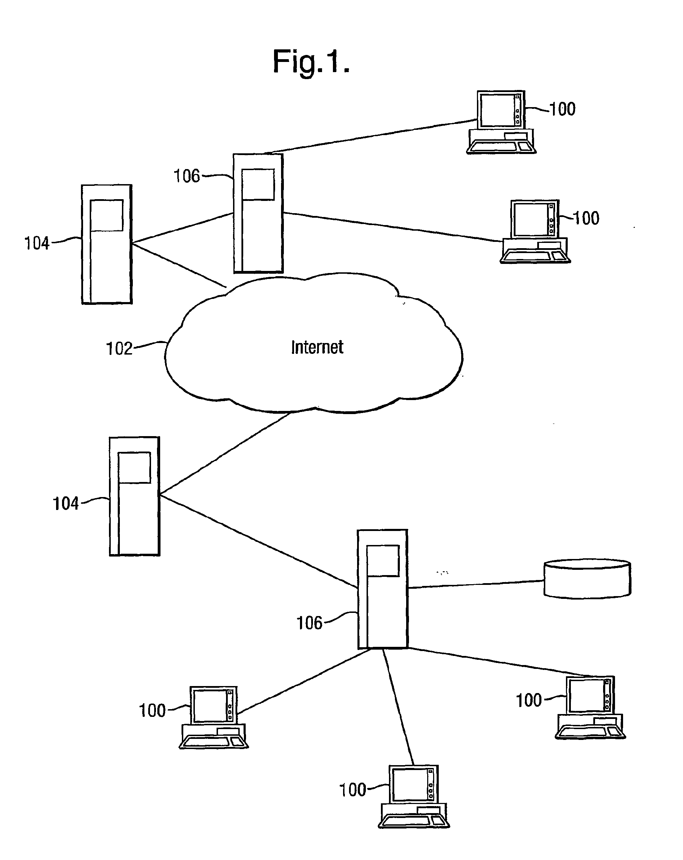

An example of an IP communications network for implementing one arrangement of the invention is shown in Figure 1. In Figure 1 a plurality of user terminals 100 are connected to the Internet 102 via respective Internet access servers 106 which are each connected to an audio processor 104. The audio processors 104 are each capable of mixing a plurality of audio data streams received over the network. Although only two audio processors 104 are shown in the network of Figure 1 in practice any number of audio processors may be provided and distributed throughout the network for receiving, mixing or transmitting respective audio data streams. The audio data streams are typically transmitted using the Internet standard data stream transfer protocol Real Time Protocol (RTP) and underlying multicast transport protocols although unicast could be used also.

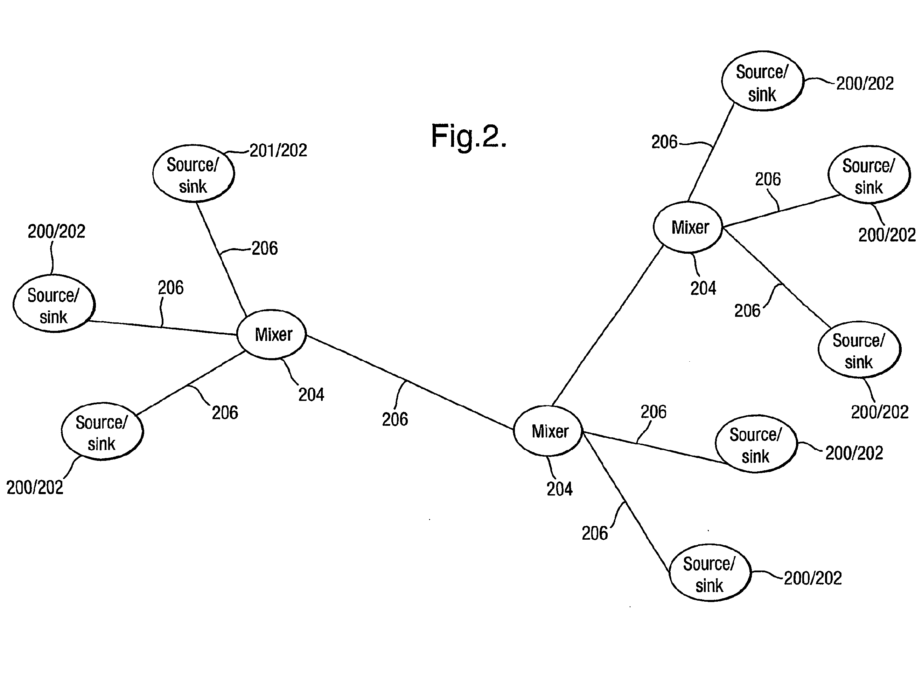

Referring to Figure 2, logically the network of Figure 1 can be considered to comprise a plurality of audio data stream sources 200, audio data stream sinks 202 and audio mixer 204 type components. Thus, each terminal 100 and audio processor 104 may comprise at least one source, sink or mixer component and the network of Figure 1 may comprise a plurality of these components linked together by audio data streams 206. In Figure 2 a simple logical network topology is shown in which the source and sink components are positioned at the terminal nodes of the network and the mixer components are positioned at the non-terminal nodes. In the network of Figure 2 each source 200 transmits one or more audio data streams to a respective parent mixer node 204. The mixer nodes may then forward the received audio data stream or streams directly to the other connected nodes, mix selected ones of the received audio data streams and then forward the respective mixed data streams, or perform a combination of these two actions. Each sink eventually receives each of the data streams either in the original un-mixed state or part of a new mixed stream. As will be described in greater detail later, each mixer component may additionally create multiple mixes from arbitrary subsets of the received data streams and transmit these mixes instead of or in addition to the audio data streams it would otherwise forward to other nodes in the network. For example, each mixer component may select to mix only some of its incoming audio data streams and forward the resultant partial mix on to other connected nodes.

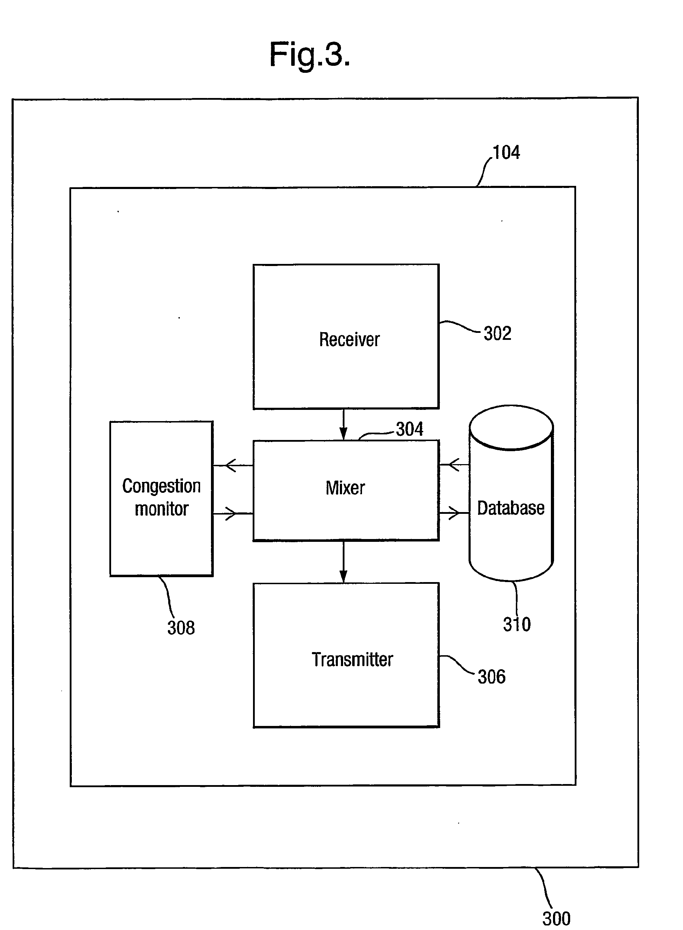

In the arrangement of Figure 3 the audio data stream processors are integrated with selected IP multicast enabled routers 300 distributed in the network of Figure 1. Each audio processor 104 comprises an audio data stream receiver 302 for receiving audio data streams transmitted over the lP network, an audio mixer component 304 for mixing selected audio data streams and an audio data stream transmitter 306 for forwarding mixed and unmixed audio data streams to other audio processors 104 or terminals 100 in the IP network. The audio data stream receiver 302 and transmitter 306 comprises software components of the type implemented in audio applications such as Real Inc's Real Player or Microsoft Inc's Media Player, for example IP sockets, packet buffers, packet assemblers etc. The audio mixer component 306 is provided for mixing two or more audio data streams received at the processor 104. The audio mixer component is arranged to average selected audio data streams to create a single combined data stream comprising the same number of bits as each unmixed data stream.

Each audio processor is further provided with a congestion monitor 308 for monitoring congestion on the respective communication transmission links connecting the audio processor to other parts of the network. In one arrangement the congestion monitor 308 utilises Real Time Control Protocol (RTCP) control messages or the like received from respective audio stream receivers in the network to determine congestion levels on respective transmission links. These control messages provide the audio processors with information relating to data stream congestion on respective neighbouring transmission links and audio processors. Selected audio processors, typically those on the edge of the network connecting terminals 100 to the Internet, are also provided with a database 310 containing data relating to recipient terminal equipment characteristics including audio data processing and playback capabilities, network connection types and speeds, other recipient specific data including current tariff data for determining an appropriate quality of service to be provided and user specific audio data stream mixing profiles comprising user defined mixing preferences and other data relating to user specific mixing policies.

Mixing may occur at many of the audio processor mixer nodes in the network of Figure 1. When an audio processor mixes selected audio streams the number of audio data streams to be transmitted to neighbouring audio processor or terminal nodes is reduced and this also reduces the amount of processing required at the neighbouring nodes. Distributing the audio processor mixer nodes throughout the network as described enables the overall audio mixing task to be shared and mixing bottlenecks avoided. Distributed processing not only provides for scalability, say in terms of the maximum number of simultaneous speakers allowed in an audio conference, but also enables audio processors to monitor and respond to changing local network conditions in heterogeneous environments such as the Internet. Since mixing reduces the quality of the audio streams being mixed the audio processors are arranged to limit the amount of mixing they perform within the constraints of the available network resources so that end user recipients receive as many separate audio streams as possible within prevailing network resource constraints. Thus, the audio data processors are arranged to adapt to changing network conditions so that at one extreme peer-to-peer communication is possible, that is when available network resources are adequate for communicating all the received audio data streams to respective neighbouring nodes. At the other extreme, where available network resources are severely restricted, say due to network congestion, all audio data streams are mixed together to provide a single data stream for communication to the neighbouring nodes.

Mixing decisions are made dynamically by the audio data processors according to software program logic stored in audio processor memory and executed by the audio processors.

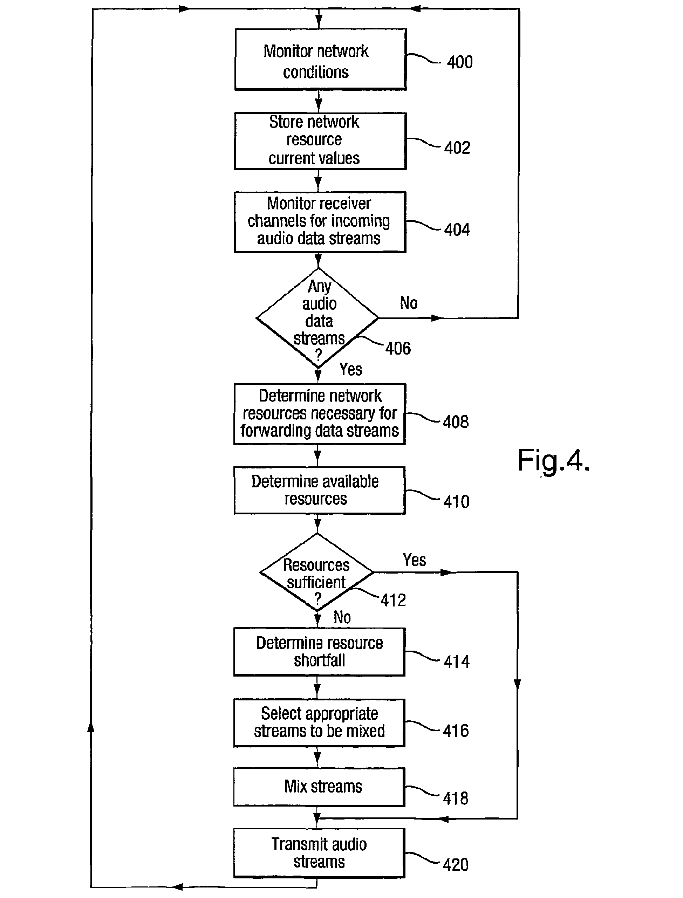

Referring now to the flowchart of Figure 4, network conditions such as available bandwidth, packet loss rate and delay are monitored by the congestion monitor 308 in step 400 to determine current values for respective network resource parameters associated with transmission links and neighbouring processor and terminal nodes located in the network. Current values for variable network resource parameters including but not limited to available bandwidth on respective transmission links and processing capacity and delay of respective processor nodes are stored in the data base 310 in step 402. Current values for other more stable network resource parameters including but not limited to terminal node processing capability and capacity and user specific mixing preferences and quality of service requirements are also stored in the processor databases 310. The more stable resource parameters may be monitored in step 400 in the same way as the variable resource parameters or by periodic polling the resources for current parameter values.

In step 404 the receiver 302 monitors relevant unicast or multicast communication channels for incoming audio data streams and determines in step 406 whether any streams are being received at the audio processor node. If audio data streams are being received the audio processor proceeds to step 408 where an appropriate algorithm determines the network resources necessary for transmitting the received data streams to the next relevant node or nodes in the network. If audio data streams are not being received monitoring continues and control passes back to step 400. In step 408 network resources necessary for forwarding all the received data streams to each respective node in the relevant network distribution tree are determined and in step 410 the respective available resources for transmitting the data streams are determined. In step 412 the current values of the relevant network resource parameters are compared with respective resource requirements necessary for communicating the received audio streams to the respective next network nodes comprising audio data stream receivers. If the available resources match those required for subsequent communication of the data streams all the data streams are transmitted onwards in step 420 to the relevant next nodes. However, if the audio processors determine in step 412 that there are insufficient resources selected mixing occurs. For instance, if there are only three communications channels available on a particular transmission link and four separate data streams are received, at least one pair of data streams are mixed prior to subsequent transmission by the respective audio processor. Similarly, if a recipient terminal node is only capable of processing two data streams simultaneously only two sets of mixed streams are provided for transmission to that terminal. Further, if a terminal node is designated as having a pre-determined quality of service as defined by a user selected tariff there may be insufficient bandwidth allocated for forwarding all the streams without mixing so that mixing will occur even if the network has sufficient bandwidth resources available on the relevant link or links to the user terminal node. In step 414 the difference between available and required resources is determined so that the number of streams to be mixed can be determined. The audio data stream processors select appropriate data streams to be mixed in step 416. The selected streams are mixed in step 418 and then transmitted by the appropriate audio processor transmitter 306 in step 420. Audio data stream selection in step 416 may be based on any number of considerations relevant to network, application or user requirements, for example.

The following discussion concerns mixing considerations that may be relevant in CSCW environments which support many simultaneous speakers.

One consideration for mixing may concern the roles of speakers. Some real-time CSCW applications assign participants to different roles within an event. For example, early experiments in inhabited television differentiated between performers, inhabitants and viewers. Performers are part of the core content of an on-line TV show whereas inhabitants are active within the virtual world, but typically receive a broadcast mix created by a director. These roles are complemented by differences in the technologies used to access the real-time event. Performers typically use professional studio-quality equipment, with fully spatialised 3D audio. Inhabitants may use commodity PCs, equipped with headphones. Viewers on the other hand may use conventional television sets, equipped with multiple loudspeaker surround sound audio systems. Roles or so called "layers of participation" can determine mixing policy. For instance, it may be appropriate to ensure that performers are heard with the maximum possible audio quality. Thus, as network congestion increases the audio streams for inhabitants might be mixed together first, with the performers streams being kept separate for as long as possible. Other CSCW applications may also benefit from defining layers of participation and using these to prioritise audio sources for mixing.

Another consideration for mixing may concern the roles of listeners or recipients. Mixing can also be prioritised according to listener requirements. Roles or layers of participation can also define the different ways in which listeners take part in an event, although many participants will be both speakers and listeners in an event. For example, an active inhabitant may benefit from fully spatialised audio that provides clues to support navigation and conversation management. A passive viewer with a surround-sound audio system may benefit from a mix that clearly separates the key performers, but where their accurate location in the world is less important. In the case of inhabitants it may be important to maintain the separation of streams from nearby participants, whereas for viewers it may be appropriate to maintain the separation of key performers only.

A further mixing consideration may concern the grouping of audio sources. CSCW applications often group participants in some pre-determined way. It is often appropriate to mix audio streams from one coherent group. For example, avatars in a CVE may have gathered together to form definable and separate groups. Audio streams from each group could be mixed to form a single stream that could be spatialised to the average position of the group as a whole in the CVE. In addition, some CSCW applications calculate levels of mutual awareness among participants which may provide a more dynamic basis for mixing respective audio streams.

Another mixing consideration may concern voice characteristics. The timbre of voices or other audio sources may be useful for determining which streams to mix. For example, it may be appropriate to mix a high and a low pitch voice into a single stream so that a listener can readily separate them when hearing the mixed stream.

Patterns of activity within a multiple speaker environment may also determine mixing decisions. For example, audio data streams from participants whose speech rarely overlaps could be mixed together

A number of more practical concerns may also shape affect mixing decisions. Mixing may depend upon aspects of the available communication network, including its topology (i.e. shape and structure), underlying bandwidth, regional variations, or transitory congestion. Mixing decisions may also depend on the available computing resources, for example the number and capability of available mixer components, how many are positioned within the network, and how heavily loaded they are. Mixing decisions may also consider the current and past states of the system. For example, the transition from one choice of mixed streams to another may be noticeable to users, and potentially undesirable.

It is clear from the above discussion that the process of selecting data streams for optimal mixing is a complex task and will very often be application specific. For instance, different applications may have different mixing requirements. In particular applications may have different ways of assigning priorities to audio streams to determine the order in which streams are gradually mixed together as network resources become scarce. Low priority streams will be mixed before higher priority streams. These requirements may also vary between different phases of the same application as a session progresses. In particular, priorities may change as participants take on different roles or move to different locations. For example, a virtual football game with the crowd (audience) will not have the same mixing requirements as a virtual shopping mall, a virtual education application (on-line demonstration, lecture etc), or an on-line television drama in a virtual world.

In a virtual football game for example, audio priority will be higher for the referee say, than the other players. In this respect, the system will avoid mixing the referee's audio stream with the respective players audio streams unless this becomes absolutely necessary due to network resource limitations. On the other hand audio streams from a crowd of spectators will have a lower priority since each spectator will not need to be heard individually. It may be sufficient to mix all the streams from the same "stand" or group of collocated spectators and spatialise only the resulting stream at the receiver. In this way mixing is based on the roles of the speakers, that is to say, audio streams from more important speakers are forwarded and less important speakers are mixed

In a virtual shopping mall, mixing policy may be based on the collocation and mutual awareness of the participants. For example, participants may want to receive separate audio streams from other collocated participants or other more important participants of whom they are more aware of than others. The remainder of the of the group can be mixed together or divided into smaller groups which are mixed separately, similar to the different stands in the football game example.

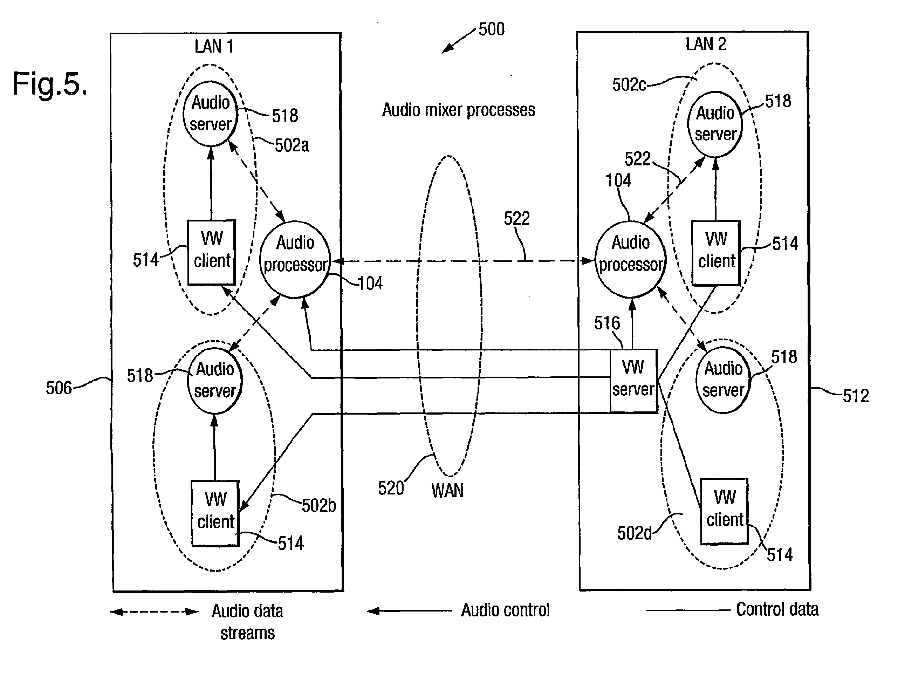

In a virtual lecture environment there is likely to be one lecturer, may be a few demonstrators and many mutually aware students. In this environment mixing can be based on speaker roles. For instance, the lecturer's and demonstrators' audio streams may be forwarded so that the other participants can process the individual streams on receipt, where the respective students audio streams will be mixed. The present inventors have implemented and tested the invention in a distributed processing system simulator 500 shown in Figure 5. In the distributed processing system two end user systems 502a and 502b are shown on a first local area network 506 and two end systems 502c and 502d on a second local area network 512. The system 500 may comprise any number of end user systems 502 depending on the networks being simulated. Each end user system comprises a respective virtual world client 514 for accessing a shared virtual world generated by a virtual world server 516 on LAN 512. Each end user system is also provided with a local audio server 518 that is interfaced to respective audio hardware (not shown) so that users can speak to each other within the virtual world environment. Each client 514 controls the local audio server 518 for the respective end system and uses information in the virtual world to determine how the audio server should transmit, receive and process audio streams, for example according to the positions of other users in the virtual world.

For peer-to-peer audio, each user's audio server 518 sends an audio data stream directly to all the other audio servers in the system using underlying unicast or multicast protocols. An audio processor 104 is provided on each LAN for mixing selected data streams received from the connected audio servers. The audio processors are both controlled directly by the virtual world server 516 and are connected together by means of a WAN simulator 520. The local audio servers 518 and audio processors 104 together define an audio distribution tree as shown by the dashed lines 522 in Figure 5. Each audio processor is capable of receiving audio data streams from the audio servers on its respective LAN and transmitting these streams to the remote audio processor on the other LAN. The audio processors are arranged to adapt to changing network conditions so that instead of three separate audio streams being forwarded from say end user systems 502a, 502b and 502c to 502d the audio processors 104 can mix respective data streams so that end user systems 502c and 502d receive a single stream comprising a mixture of the streams from end user systems 502a and 502b and a separate audio stream from each other, for example.

The inventors evaluated the effectiveness of dynamic mixing by investigating the effect of network congestion on audio quality. Two quantifiable aspects of audio quality were considered, the level of packet loss experienced and the degree of audio stream spatialisation, that is the number of separate audio streams delivered to an end system. These two criteria were chosen since they both relate to the end user's perceived experience of the system and they can also be readily determined from measurements of the system 500, for example the number of packets being sent per second. The first measure, the level of packet loss experienced, is the primary determinant of whether a network audio stream will be intelligible to the user and therefore of any use at all. Audio codecs that encode audio streams in 40ms to 80ms packets and utilise silence substitution for packet loss recovery typically become unintelligible if 15% or more of the packets are lost during transmission. Other factors such as delay or jitter are of secondary importance by comparison. The second measure, the degree of spatialisation, is the primary distinguishing feature between the peer-to-peer, fully mixed and partially mixed approaches. For instance, research has shown that spatialised audio is a key factor in providing users with a sense of presence in a virtual environment.

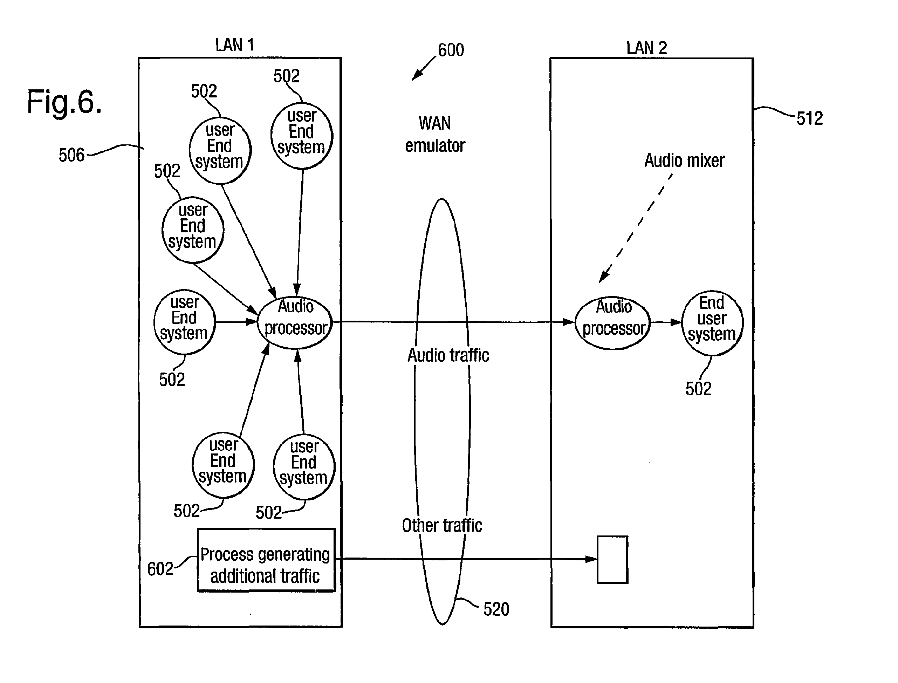

Referring to Figure 6 which shows a system 600 configured from the system of Figure 5 for evaluating the effect of network congestion on audio quality. In Figure 6 the LANs 506 and 512 are assumed to be generally congestion free high bandwidth networks connected via a lower bandwidth shared WAN 520 which is prone to congestion. Six end

user systems 502 are provided on LAN 506 for simulating network usage. A single end user system is provided on LAN 512. A WAN simulation tool is provided for simulating network delays and bandwidth restrictions for a limited bandwidth WAN connection. An additional application 602 is provided for introducing controlled levels of competing traffic onto the simulated WAN connection 520 in order to create network congestion.

All packets on the system 600 are monitored and analysed to classify the packets and to measure the number of audio streams in transit and the amount of competing traffic. Packet loss experienced by the audio streams in transit is measured by matching the number of packets leaving LAN 506 to those arriving on LAN 512.

The following strategy was used to evaluate the system of Figure 6:-
- Six simulated users on LAN 506 continuously sending audio data to a single user on LAN 512.
- Virtual WAN bandwidth limit of 500 Kbit/second corresponding to just over seven audio streams for 8KHz, 8bit, Ulaw, mono audio encoding. A WAN buffer size of 250 Kbits.
- Eight levels of competing (congestion-inducing) traffic: 0, 70, 140, 210, 280, 350, 420, and 490 Kbits/s.
- Three audio distribution strategies: forward all audio streams without mixing (equivalent to peer-to-peer multicast), mix all audio streams before forwarding (equivalent to total mixing at LAN 1), and mix a dynamic subset of audio streams (parial mixing).

In the final distribution strategy dynamic or partial mixing was used to keep the packet loss rate below 15% whilst maintaining the maximum number of separate audio streams.

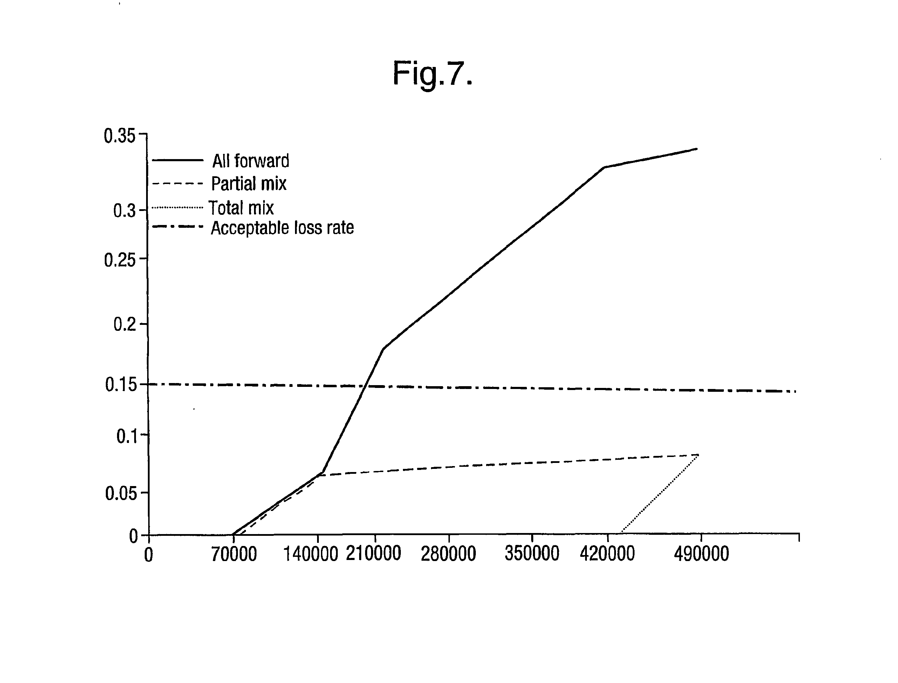

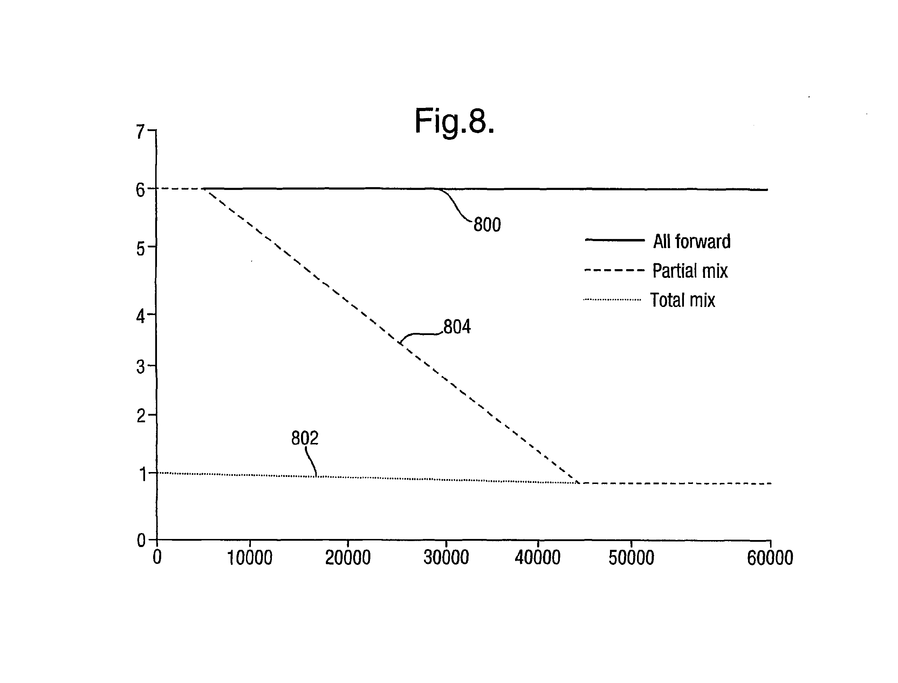

The experimental results are shown in Figures 7 and 8. Figure 7 shows the effect that increasing levels of congestion has on the packet loss rate experienced for each of the three audio distribution strategies. The peer-to-peer approach (line 700 in the graph of Figure 7) experiences increasing levels of packet loss as competing traffic increases. The packet loss rate exceeds 15% at 210 Kbits/s of additional traffic. Full-mixing (line 702 in the drawing) uses the minimum bandwidth throughout, and only starts to experience congestion when the competing traffic reaches 490 Kbits/s. Distributed partial mixing (line 704 in the drawing) gives higher loss rates than full mixing, but much lower rates than all-forwarding peer-to-peer, and maintains its loss rate below 15% even with 490 Kbit/s of competing traffic (as for full mixing).

Figure 8 shows the number of separate audio streams being transmitted to a listener on the end user system on LAN 512. For all-forwarding (line 800 in the graph of Figure 8), six streams are always transmitted by the LAN 506, however none of these arrive in any useful form when competing traffic levels exceed 210 Kbits/s. For total mixing (line 802 in Figure 8), one stream is always sent. Dynamic mixing (line 804 in Figure 8) lies between these two extremes. With no congestion, six distinct steams are transmitted over the WAN connection from the WAN 506 to the WAN 512. As competing traffic, and hence congestion increases, dynamic mixing reduces the number of distinct streams by mixing more audio streams together. When competing traffic levels reach 490 Kbits/s dynamic mixing falls back to total mixing, with only a single stream sent over the WAN.

The above described investigation demonstrates that dynamic or distributed partial mixing combines the benefits of both peer-to-peer and total mixing audio services. With sufficient bandwidth, the system operates like a peer-to-peer system, delivering independent audio streams to each listener, giving maximum individual flexibility and control over what users hear. As bandwidth becomes restricted the distributed partial mixing scheme moves incrementally towards a totally mixed (minimum bandwidth) service, thereby preserving a useful level of audio communication under a wide range of network conditions.

More generally, the distributed partial mixing approach has the following distinctive benefits: it is adaptive, reacting to network congestion in a way that peer-to-peer systems cannot; it supports dynamic load balancing between different distributed components of the audio service; it readily supports heterogeneous networks and different end user terminal capabilities; and it is adapative to varying application requirements.

## Claims

1. A method of processing audio data streams transmitted in a communications network; said method comprising the steps of:-
i) receiving a plurality of audio data streams transmitted from one or more audio data stream transmitters distributed in the network (404); and **characterized by**
ii) processing data relating to at least one respective network resource parameter to determine respective network resources available for subsequent communication of said audio data streams to at least one respective audio data stream receiver in the network (408); and,
iii) comparing said available resources with respective network resource requirements necessary for communicating said audio streams to at least one respective audio data stream receiver in the network (410, 412); and,
iv) determining whether to mix selected audio data streams prior to transmission in response to said comparison (418, 420).

2. A method according to claim 1 further comprising the step of:-
v) processing two or more audio streams in response to said comparison to provide at least one mixed audio data stream for subsequent transmission in said network.

3. A method according to claim 1 or claim 2 wherein steps ii) and iii) comprise the steps of:-
determining a current value for the or each respective network resource parameter, and
comparing the or each respective current resource parameter value with a respective minimum resource threshold value necessary for communicating said unmixed audio data streams to the or each respective receiver.

4. A method according to claim 3 wherein said minimum resource threshold value is determined according to at least one pre-defined quality of service parameter.

5. A method according to claim 4 wherein said network is a packet switched network and said pre-defined quality of service parameter is defined by a maximum packet loss rate.

6. A method according to any preceding claim wherein one network resource parameter relates to available network bandwidth for transmission of said audio data streams to the or each respective receiver.

7. A method according to claim 6 wherein said available bandwidth capacity is determined by user specific quality of service requirements.

8. A method according to any preceding claim wherein one network resource parameter relates to receiver processing characteristics.

9. A method according to any preceding claim wherein said audio data streams are selected for mixing according to predetermined criteria.

10. A method according to claim 9 wherein said audio streams are mixed according to respective audio stream content.

11. A method according to claim 9 wherein said audio streams are mixed according to respective recipient requirements.

12. A method according to claim 9 wherein said audio streams are mixed according to respective audio stream sources.

13. A method according to claim 9 wherein said audio streams are mixed according to respective receiver audio data stream processing capabilities.

14. A software program component for processing audio data streams transmitted in a communications network; said program being arranged to execute the following steps when run on a computer:
i) receive a plurality of audio data streams transmitted from one or more audio data stream transmitters distributed in the network; and **characterized by** :
ii) process data relating to at least one respective network resource parameter to determine respective network resources available for subsequent transmission of said audio data streams in the network; and,
iii) compare said available resources with respective network resource requirements necessary for transmission of said audio streams to at least one respective audio data stream receiver in the network; and,
iv) determine whether to mix selected audio data streams prior to transmission in response to said comparison.

15. A system for processing audio data streams transmitted in a communications network; said system comprising:-
i) a receiver (301) for receiving a plurality of audio data streams transmitted from one or more audio data stream transmitters distributed in the network; and, **characterized by**
ii) a processor (104) for processing data relating to at least one respective network resource parameter to determine respective network resources available for subsequent transmission of said audio data streams in the network; and,
iii) a comparator for comparing said available resources with respective network resource requirements necessary for transmission of said audio streams to at least one respective audio data stream receiver in the network; and,
iv) determining means for determining whether to mix selected audio data streams prior to transmission in response to said comparison.

## Patentansprüche

1. Verfahren zur Verarbeitung von Audiodatenströmen, die in einem Kommunikationsnetzwerk übertragen werden, wobei das Verfahren die folgenden Schritte umfasst:
i) Empfangen von mehreren Audiodatenströmen (404), die von einem oder von mehreren in dem Netzwerk verteilten Audiodatenstromsendern gesendet werden, und
**gekennzeichnet ist durch**
ii) Verarbeiten von Daten (408), die sich auf zumindest einen jeweiligen Netzwerkressourcenparameter zum Ermitteln entsprechender Netzwerkressourcen beziehen, die für eine nachfolgende Übertragung der Audiodatenströme an zumindest einen jeweiligen Audiodatenstromempfänger des Netzwerks verfügbar sind, und
iii) Vergleichen der verfügbaren Ressourcen mit dem jeweiligen Netzwerkressourcenbedarf (410, 412), der für die Übertragung der Audiodatenströme an zumindest einen jeweiligen Audiodatenstromempfänger des Netzwerks erforderlich ist, und
iv) Bestimmen, ob ausgewählte Audiodatenströme vor der Übertragung als Reaktion auf den Vergleich zu mischen sind (418, 420).

2. Verfahren nach Anspruch 1, das ferner den Schritt umfasst zum
v) Verarbeiten von zwei oder mehr Audiodatenströmen als Reaktion auf den Vergleich, um für die nachfolgende Übertragung in dem Netzwerk zumindest einen gemischten Audiodatenstrom herzustellen.

3. Verfahren nach Anspruch 1 oder 2, worin die Schritte ii) und iii) die Schritte zum
Bestimmen eines aktuellen Werts für den oder für jeden der jeweiligen Netzwerkressourcenparameter und zum
Vergleichen des oder eines jeden der jeweiligen aktuellen Netzwerkressourcenparameterwerte mit einem entsprechenden Minimalressourcenschwellwert umfassen, der zur Übertragung der nicht gemischten Audiodatenströme an den oder jeden der jeweiligen Empfänger erforderlich ist.

4. Verfahren nach Anspruch 3, worin der Minimalressourcenschwellwert zumindest einem vorgegebenen Dienstgüteparameter entsprechend festgelegt wird.

5. Verfahren nach Anspruch 4, worin das Netzwerk als Datenpaketvermittlungsnetzwerk ausgebildet ist und der vorgegebene Dienstgüteparameter durch eine maximale Paketverlustrate bestimmt ist.

6. Verfahren nach einem der vorhergehenden Ansprüche, worin ein Netzwerkressourcenparameter auf die verfügbare Netzwerkbandbreite zur Übertragung der Audiodatenströme an den oder jeden der jeweiligen Empfänger bezogen ist.

7. Verfahren nach Anspruch 6, worin die verfügbare Bandbreitenkapazität über benutzerspezifische Dienstgütevorgaben bestimmt wird.

8. Verfahren nach einem der vorhergehenden Ansprüche, worin ein Netzwerkressourcenparameter auf eine Empfängerverarbeitungseigenschaft bezogen ist.

9. Verfahren nach einem der vorhergehenden Ansprüche, worin die Audiodatenströme nach einem vorgegebenen Kriterium zum Mischen ausgewählt werden.

10. Verfahren nach Anspruch 9, worin die Audiodatenströme nach dem jeweiligen Inhalt der Audiodatenströme gemischt werden.

11. Verfahren nach Anspruch 9, worin die Audiodatenströme nach den jeweiligen Empfängervoraussetzungen gemischt werden.

12. Verfahren nach Anspruch 9, worin die Audiodatenströme entsprechend den jeweiligen Audiodatenstromquellen gemischt werden.

13. Verfahren nach Anspruch 9, worin die Audiodatenströme entsprechend dem jeweiligen Vermögen der Empfänger zur Verarbeitung von Audiodatenströmen gemischt werden.

14. Datenverarbeitungsprogrammkomponente zum Verarbeiten von Audiodatenströmen, die in einem Kommunikationsnetzwerk übertragen werden, wobei das Programm dazu ausgebildet ist, bei einer Ausführung auf einer Datenverarbeitungsanlage die folgenden Schritte auszuführen:
i) Empfangen von mehreren Audiodatenströmen, die von einem oder von mehreren in dem Netzwerk verteilten Audiodatenstromsendern gesendet werden, und
**gekennzeichnet ist durch**
ii) Verarbeiten von Daten, die sich auf zumindest einen jeweiligen Netzwerkressourcenparameter zum Ermitteln entsprechender Netzwerkressourcen beziehen, die für eine nachfolgende Übertragung der Audiodatenströme in dem Netzwerks verfügbar sind, und
iii) Vergleichen der verfügbaren Ressourcen mit dem jeweiligen Netzwerkressourcenbedarf, der für die Übertragung der Audiodatenströme an zumindest einen jeweiligen Audiodatenstromempfänger des Netzwerks erforderlich ist, und
iv) Bestimmen, ob ausgewählte Audiodatenströme vor der Übertragung als Reaktion auf den Vergleich zu mischen sind.

15. Vorrichtung zur Verarbeitung von Audiodatenströmen, die in einem Kommunikationsnetzwerk übertragen werden, wobei die Vorrichtung umfasst:
i) einen Empfänger (301) zum Empfangen von mehreren Audiodatenströmen, die von einer oder von mehreren in dem Netzwerk verteilten Audiodatenstromsendern gesendet werden, und
**gekennzeichnet ist durch**
ii) einen Prozessor (104) zum Verarbeiten von Daten, die sich auf zumindest einen jeweiligen Netzwerkressourcenparameter zum Ermitteln entsprechender Netzwerkressourcen beziehen, die für eine nachfolgende Übertragung der Audiodatenströme in dem Netzwerks verfügbar sind, und
iii) einen Komparator zum Vergleichen der verfügbaren Ressourcen mit dem jeweiligen Netzwerkressourcenbedarf, der für die Übertragung der Audiodatenströme an zumindest einen jeweiligen Audiodatenstromempfänger des Netzwerks erforderlich ist, und
iv) eine Bestimmungseinrichtung zum Bestimmen, ob ausgewählte Audiodatenströme vor der Übertragung als Reaktion auf den Vergleich zu mischen sind.

## Revendications

1. Procédé de traitement de trains de données audio transmis dans un réseau de communication, ledit procédé comprenant les étapes suivantes :
i) la réception d'une pluralité de trains de données audio émis depuis un ou plusieurs émetteurs de trains de données audio répartis dans le réseau (404), et **caractérisé par** :
ii) le traitement de données se rapportant à au moins un paramètre de ressource de réseau respective pour déterminer des ressources de réseau respectives disponibles pour une communication ultérieure desdits trains de données audio à au moins un récepteur de trains de données audio respectif dans le réseau (408), et
iii) la comparaison desdites ressources disponibles aux exigences de ressources de réseau respectives nécessaires pour communiquer lesdits trains de données audio à au moins un récepteur de trains de données audio respectif dans le réseau (410, 412), et
iv) la détermination du mélange ou non de trains de données audio sélectionnés avant la transmission, en réponse à ladite comparaison (418, 420).

2. Procédé selon la revendication 1, comprenant en outre l'étape suivante :
v) le traitement de deux trains de données audio ou plus en réponse à ladite comparaison pour procurer au moins un train de données audio mélangé en vue d'une transmission ultérieure dans ledit réseau.

3. Procédé selon la revendication 1 ou la revendication 2, dans lequel les étapes ii) et iii) comprennent les étapes consistant à :
déterminer une valeur en cours pour le ou chaque paramètre de ressource de réseau respectif, et
comparer la ou chaque valeur de paramètre de ressource en cours respectif à une valeur de seuil de ressource minimale respective nécessaire pour communiquer lesdits trains de données audio non mélangés au récepteur ou à chaque récepteur respectif.

4. Procédé selon la revendication 3, dans lequel ladite valeur de seuil de ressource minimale est déterminée conformément à au moins un paramètre de qualité de service prédéfini.

5. Procédé selon la revendication 4, dans lequel ledit réseau est un réseau commuté par paquets et ledit paramètre de qualité de service prédéfini est défini par un taux de perte de paquets maximal.

6. Procédé selon l'une quelconque des revendications précédentes, dans lequel un paramètre de ressource de réseau se rapporte à une bande passante de réseau disponible pour la transmission desdits trains de données audio au récepteur ou à chaque récepteur respectif.

7. Procédé selon la revendication 6, dans lequel ladite capacité de bande passante disponible est déterminée par les exigences de qualité de service spécifiques à un utilisateur.

8. Procédé selon l'une quelconque des revendications précédentes, dans lequel un paramètre de ressource de réseau se rapporte à des caractéristiques de traitement de récepteur.

9. Procédé selon l'une quelconque des revendications précédentes, dans lequel lesdits trains de données audio sont sélectionnés en vue d'un mélange conformément à des critères prédéterminés.

10. Procédé selon la revendication 9, dans lequel lesdits trains de données audio sont mélangés conformément à des contenus des trains de données audio respectifs.

11. Procédé selon la revendication 9, dans lequel lesdits trains de données audio sont mélangés conformément à des exigences de destinataires respectives.

12. Procédé selon la revendication 9, dans lequel lesdits trains de données audio sont mélangés conformément à des sources de trains de données audio respectives.

13. Procédé selon la revendication 9, dans lequel lesdits trains de données audio sont mélangés conformément à des capacités de traitement de trains de données audio de récepteurs respectifs.

14. Composant de programme logiciel destiné à traiter des trains de données audio transmis dans un réseau de communication, ledit programme étant conçu pour exécuter les étapes suivantes quand il est exécuté sur un ordinateur :
i) la réception d'une pluralité de trains de données audio émis depuis un ou plusieurs émetteurs de trains de données audio répartis dans le réseau, et **caractérisé par** :
ii) le traitement de données se rapportant à au moins un paramètre de ressource de réseau respectif pour déterminer des ressources de réseau respectives disponibles en vue d'une transmission ultérieure desdits trains de données audio dans le réseau, et
iii) la comparaison desdites ressources disponibles à des exigences de ressources de réseau respectives nécessaires à la transmission desdits trains de données audio à au moins un récepteur de trains de données audio respectif dans le réseau, et
iv) la détermination du mélange ou non de trains de données audio sélectionnés avant la transmission, en réponse à ladite comparaison.

15. Système de traitement de trains de données audio transmis dans un réseau de communication, ledit système comprenant :
i) un récepteur (302) destiné à recevoir une pluralité de trains de données audio émis depuis un ou plusieurs émetteurs de trains de données audio répartis dans le réseau, et **caractérisé par** :
ii) un processeur (104) destiné à traiter des données se rapportant à au moins un paramètre de ressource de réseau respectif pour déterminer des ressources de réseau respectives disponibles en vue d'une transmission ultérieure desdits trains de données audio dans le réseau, et
iii) un comparateur destiné à comparer lesdites ressources disponibles auxdites exigences de ressources de réseau respectives nécessaires pour la transmission desdits trains de données audio à au moins un récepteur de trains de données audio respectif dans le réseau, et
iv) un moyen de détermination destiné à déterminer s'il faut mélanger des trains de données audio sélectionnés avant la transmission, en réponse à ladite comparaison.
